# EUROPÄISCHE PATENTANMELDUNG

(11) **EP 2 679 968 A2**
(43) Veröffentlichungstag der Anmeldung: **01.01.2014**
(21) Anmeldenummer: 13002935.8
(22) Anmeldetag: 06.06.2013
(51) Int. Cl.: G01K 1/14, G01K 13/02

(54) **Temperaturmesseinrichtung mit Temperaturmesshülse zur Messung der Temperatur eines fließenden Mediums**

(30) Priorität: 26.06.2012 DE 102012012740
(71) Anmelder: Linde Aktiengesellschaft, 80331 München (DE)
(72) Erfinder: Helmschrott, Rolf-Harald, 82515 Wolfratshausen (DE); Wellenhofer, Anton, 82069 Hohenschäftlarn (DE)
(74) Vertreter: Zahn, Christoph

(57) **Zusammenfassung**

Die Erfindung betrifft eine Temperaturmesseinrichtung (30) zur Messung der Temperatur eines durch ein Rohrleitungsstück (11) fließenden Mediums, wobei die Temperaturmesseinrichtung (30) eine in das Rohrleitungsstück (11) eingebrachte Temperaturmesshülse (10) umfasst, in der ein Temperatursensor angeordnet ist, wobei die Temperaturmesshülse (10) zum Teil in das Rohrleitungsstück (11) hineinragt, wobei die Wandstärke zumindest des in das Rohrleitungsstück (11) hineinragenden Teils der Temperaturmesshülse (10) geringer ist als die des Rohrleitungsstücks (11), wobei die Wandstärke der Temperaturmesshülse (10) in einem vorgegebenen Bereich (12) um den Temperatursensor herum nochmals verringert ist.

## Beschreibung

Die Erfindung betrifft eine Temperaturmesseinrichtung zur Messung der Temperatur eines durch ein Rohrleitungsstück fließenden Mediums, wobei die Temperaturmesseinrichtung eine in das Rohrleitungsstück eingebrachte Temperaturmesshülse umfasst, in der ein Temperatursensor angebracht ist.

### Stand der Technik

Solche Temperaturmesseinrichtungen sind an sich bekannt und werden in Rohrleitungen verbaut, durch die ein Medium fließt, dessen Temperatur beispielsweise für nach- oder vorgeschaltete Verfahrensschritte möglichst genau bestimmt werden soll. Besonders bedeutungsvoll ist die Temperaturmessung im Hochdruckbereich bei den dort üblichen hohen Rohrwandstärken.

Hier sind auch anders aufgebaute Temperaturmesseinrichtungen bekannt, bei denen etwa der Temperatursensor auch ohne Hülle, also ohne Temperaturmesshülse, direkt in die Strömung, also in das Rohrinnere eingebaut wird. Beim Versagen der Sensorwand führt dies jedoch zur Freisetzung von Medium und/oder zum Kontakt der Medien mit den Elementen aus dem Sensor bzw. der Sensorwand. Dies könnte bei hochexplosiven oder stark reaktionsfähigen Medien, wie Wasserstoff, fatale Folgen haben. Alternativ kann die Temperaturmessung direkt auf der äußeren Rohrwand vorgenommen werden. Hierbei ist jedoch der Temperaturabfall über die Rohrwand zu beachten; außerdem ist die Medientemperatur durch die Rohrwand nur verzögert zu messen.

Bei einer bekannten gattungsgemäßen Temperaturmesseinrichtung befindet sich ein wechselbarer Temperatursensor in einer Temperaturmesshülse. Die Wandstärke der Temperaturmesshülse beträgt in der Regel mehr als 5 mm an seiner dünnsten Stelle. Beim Einsatz in vergleichsweise dünnen Rohrinnendurchmessern ist der Einbau solcher dickwandigen Temperaturmesshülsen nur schlecht bis gar nicht möglich, außerdem verursacht die dort eingebaute Temperaturmesshülse einen hohen Strömungsdruckverlust. Die untere Grenze des Rohrinnendurchmessers, bis zu der ein Einbau einer solchen Temperaturmesshülse möglich ist, ist gegeben durch: 2*d_{w}+dₛ, wobei d_{w} die maximale Wandstärke der Temperaturmesshülse und dₛ die Sensorstärke darstellt. Mit d_{w} = 5 mm und dₛ = 2 mm beträgt die untere Grenze für den Rohrinnendurchmesser 12 mm.

Aufgrund der hohen Wandstärke der Temperaturmesshülse ist - bis auf die Wechselbarkeit des Sensors - kein Vorteil zur Temperaturmessung auf der äußeren Rohrwand erkennbar.

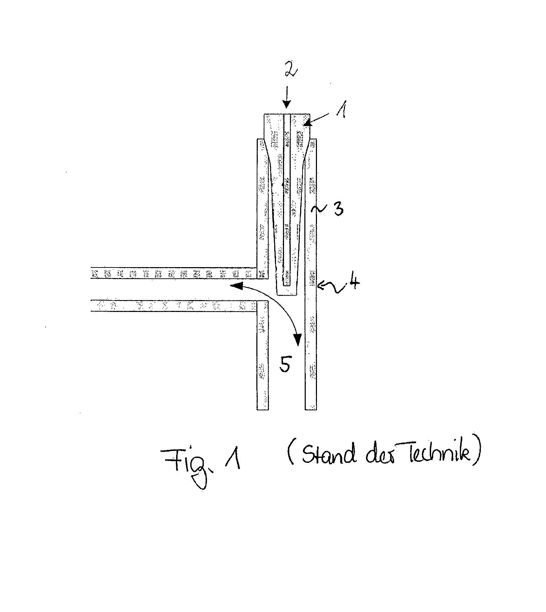

Figur 1 zeigt eine bekannte Ausführungsform der beschriebenen Temperaturmesshülse, die mit 1 bezeichnet ist. Bei dem Rohrleitungsstück handelt es sich um ein T-Stück 4 mit einem langen Schenkel zur Aufnahme der Temperaturmesshülse 1. Die auch als Druckhülse bezeichnete Temperaturmesshülse 1 weist ein Einsteckrohr 2 für den Temperatursensor auf. Der Stutzen 3 oder lange Schenkel ist zur Aufnahme der Druckhülse aufgeweitet. Die möglichen Strömungsrichtungen des Mediums 5 sind durch einen Doppelpfeil angedeutet.

Die dargestellte Konstruktion führt zu einer schlechten Strömungsführung aufgrund der Strömungswiderstände und Strömungsumleitung. Üblicherweise wird die Temperaturmesshülse 1 in einen großvolumigen Standardstutzen 3 (langer Schenkel des T-Stücks 4) eingeschraubt. Insgesamt ergibt sich hierdurch ein großes Baumaß. Durch die auftretenden großen freien Längen sind gewisse Mindestmaterialstärken der Temperaturmesshülse 1 einerseits und des Stutzens 3 andererseits zur Vermeidung von Schwingungen durch das anströmende Medium 5 notwendig. Als weiterer Nachteil verbleibt die bereits genannte relativ hohe minimale Wandstärke der zylindrisch zur Spitze zulaufenden Temperaturmesshülse 1.

Aufgabe vorliegender Erfindung ist daher die Angabe einer verbesserten Temperaturmesseinrichtung, die eine schnelle und unverfälschte Messung der Temperatur des durch ein Rohrleitungsstück strömenden Mediums erlaubt, insbesondere ohne die Strömungsdynamik stärker als unbedingt notwendig negativ zu beeinflussen und somit einen hohen Strömungsdruckverlust zu erzeugen.

### Offenbarung der Erfindung

Die Erfindung schlägt zur Lösung der Aufgabe eine Temperaturmesseinrichtung der eingangs genannten Art vor, bei der die Temperaturmesshülse zum Teil in das Rohrleitungsstück hineinragt, wobei die Wandstärke zumindest des in das Rohrleitungsstück hineinragenden Teils der Temperaturmesshülse geringer ist als die des Rohrleitungsstücks, wobei die Wandstärke und/oder der Außendurchmesser der Temperaturmesshülse in einem vorgegebenen Bereich um den Temperatursensor herum nochmals verringert ist. Die Erfindung betrifft weiterhin die entsprechende Temperaturmesshülse sowie das entsprechende Rohrleitungsstück, das als Rohrleitungsformbauteil zur Aufnahme der Temperaturmesshülse ausgebildet ist. Schließlich betrifft die Erfindung die Verwendung einer erfindungsgemäßen Temperaturmesseinrichtung zur Messung der Temperatur von durch das Rohrleitungsstück strömendem Wasserstoff. Weitere Ausgestaltungen der Erfindung ergeben sich aus den jeweiligen Unteransprüche und der nachfolgenden Beschreibung.

### Vorteile der Erfindung

Die erfindungsgemäße Temperaturmesseinrichtung weist eine Temperaturmesshülse auf, die verglichen mit dem Rohrleitungsstück, in dem das Medium, dessen Temperatur gemessen werden soll, fließt, eine geringere Wandstärke aufweist.

Die Temperaturmesshülse wird in der Regel so ausgeführt, daß der äußere Durchmesser kleiner, gleich oder aus verbindungstechnischen Gründen geringfügig größer dem Innendurchmesser des Rohrleitungsstücks ist.

Die Dünnwandigkeit der Temperaturmesshülse ermöglicht einen kleinen Außendurchmesser der Temperaturhülse, der insbesondere kleiner gleich dem Innendurchmesser des Rohrleitungsstücks ist, und somit insgesamt eine geringe Baugröße der Temperaturmesseinrichtung. Dadurch, dass die Wandstärke und/oder der Außendurchmesser in einem vorgegebenen Bereich um den Temperatursensor herum nochmals verringert ist, wird ein schneller Wärmeübertrag auf den Temperatursensorsichergestellt. Hierbei befindet sich der Bereich der nochmals verringerten Wandstärke und/oder der Außendurchmesser insbesondere an der Spitze der Temperaturmesshülse. Es ist ausreichend, wenn dieser in seiner Wandstärke und/oder der Außendurchmesser verringerte Bereich, insbesondere also die Spitze der Temperaturmesshülse in das Innere des Rohrleitungsstücks ragt, um dort die Temperatur des Mediums zu messen. Hierdurch ist es möglich, dass nur ein kleiner Teil der Temperaturmesshülse in das Rohrinnere ragt. Zweckmäßig ist eine kurze freie Spitze der Temperaturhülse, die in das Rohrinnere ragt. Eine solche Konstruktion baut klein, ist schwingungsfest und beeinflusst die Strömung kaum. Die Wandstärke der kurzen freien Spitze kann auf die minimal notwendige Wandstärke reduziert werden, was von der Festigkeit des augewählten Werkstoff und den Betriebsbedingungen abhängt. Aus Gründen der Strömungmechanik und der Wärmeübertragung ist eine Verhältnis vom Außendurchmesser der Spitze zu Innendurchmesser des Rohrstücks von kleiner/gleich 0.75 anzustreben.

Es ist insbesondere vorteilhaft, wenn die Temperaturmesshülse hochdruckfest und/oder aus hochfestem Material ausgeführt wird, was zu einer weiteren Verringerung der minimal notwendigen Wandstärke der Temperaturhülse und damit des Gesamtdurchmessers der Temperaturhülse führt.

Die Temperaturmesshülse kann mit Vorteil mit einem geringeren Außendurchmesser bei gleicher Sensorstärke dₛ als derjenige des Rohrleitungsstücks, insbesondere als die Wandstärke des Rohrleitungsstücks, ausgeführt werden. Dies erlaubt die Einbringung der Temperaturmesshülse in Rohre mit geringeren Innendurchmessern als bisher möglich.

Es ist insbesondere vorteilhaft, wenn die Temperaturmesshülse sich durch die Wand des Rohrleitungsstücks hindurch bis in einen Bereich um die Achse des Rohrleitungsstücks in das Innere desselbigen erstreckt. Beispielsweise kann die Spitze der Temperaturmesshülse oder die Mitte des in seiner Wandstärke nochmals verringerten Bereichs der Temperaturmesshülse bis zu der Achse oder im Wesentlichen bis zu der Achse des Rohrleitungssystems reichen. Als Achse des Rohrleitungssystems ist hier die Längsachse gemeint. Im Gegensatz zum Stand der Technik füllt somit die Temperaturmesshülse nicht große Bereiche des Rohrinneren aus, sondern ragt mit ihrer Spitze, ausgehend von der Innenwand des Rohrs, ein kleines Stück, vorzugsweise bis in die Mitte des Innenraums, hinein. Dies führt zu einer stabilen Anordnung, die zudem die Strömung möglichst wenig beeinflusst und einen geringen Strömungsdruckverlust aufweist.

Es ist vorteilhaft, wenn die Achse der insbesondere im Wesentlichen zylinderförmigen Temperaturmesshülse bezogen auf die Strömungsrichtung des Mediums in einem spitzen Winkel zur genannten Achse des Rohrleitungsstücks steht. Bei einer leicht dezentrierten Anordnung besteht der spitze Winkel zwischen der Achse der Temperaturmesshülse und einer zur Achse des Rohrleitungsstücks parallelen Geraden. Die Spitze der Temperaturmesshülse wird somit von dem Medium unter einem spitzen Winkel angeströmt. Befindet sich die Spitze etwa im Zentrum des Rohres, so ist hierdurch eine optimale Temperaturmessung garantiert.

Die Erfindung betrifft auch eine Temperaturmesshülse, die in ein Rohrleitungsstück einbringbar ist, mit den Merkmalen, wie sie oben im Zusammenhang mit der erfindungsgemäßen Temperaturmesseinrichtung beschrieben wurden. Die Temperaturmesshülse wird in einem entsprechend ausgebildeten Gegenstück im Rohrleitungsstück befestigt, z.B. über Klemmringverbindung, vorzugsweise geschraubt und/oder dichtgeschweißt

Die Erfindung betrifft auch ein Rohrleitungsstück einer oben beschriebenen erfindungsgemäßen Temperaturmesseinrichtung, wobei dieses Rohrleitungsstück als Rohrleitungsformbauteil zur Aufnahme einer erfindungsgemäßen Temperaturmesshülse ausgebildet ist. Das Rohrleitungsformbauteil wird auch als Aufnahmefitting bezeichnet. Es handelt sich um ein Bauteil, das in eine Rohrleitung eingesetzt wird, in der das Medium fließt, dessen Temperatur zu messen ist. Hierbei ist es sinnvoll, wenn ein Flansch zur Aufnahme der Temperaturmesshülse in dem Rohrleitungsformbauteil vorgesehen ist, wobei dieser Flansch vorzugsweise einstückig mit dem Formbauteil ausgeführt ist. Der Flansch verfügt über eine Öffnung zum Einführen der Temperaturmesshülse in das Innere des Formbauteils. Steht die Achse der Temperaturmesshülse in einem Winkel zur Achse des Rohrleitungsstücks bzw. des Formbauteils, so ist die Flanschöffnung zweckmäßigerweise entsprechend orientiert.

Es ist vorteilhaft, wenn der Innendurchmesser des Rohrleitungsformbauteils in einer Umgebung des Flansches größer ausgeführt ist als außerhalb dieser Umgebung. Hierbei kann diese Umgebung des Flansches sich über den größten Teil der Länge im Innenraum des Rohrleitungsformbauteils erstrecken, so dass nur die Endstücke des Rohrleitungsformbauteils den geringeren Innendurchmesser besitzen. Mit dieser Ausgestaltung ist die Abwägung zwischen höherem Strömungsdruckverlust und schnellerer Reaktion des Temperaturfühlers durch den verbesserten Wärmeübergang zum Fühler und einem niedrigerem Strömungsdruckverlust bei gleichzeitig reduziertem Wärmeübergang möglich.

Schließlich ist die erfindungsgemäße Temperaturmesseinrichtung besonders gut zur Messung der Temperatur von durch das Rohrleitungsstück bzw. das Rohrleitungsformbauteil strömendem Wasserstoff geeignet.

Das Rohrleitungsformbauteil zur Aufnahme der Temperaturhülse hat zusammengefasst folgende Vorteile und Eigenschaften:
- schwingungsfeste Konstruktion, da nur kurze freie Spitze der Temperaturmesshülse in das Innere ragt;
- Sensorspitze befindet sich in der Strömung;
- kleine Baugröße des Rohrleitungsformbauteils sowie der zusammengesetzten Temperaturmesseinrichtung;
- gerade Strömungsführung möglich (kein T-Stück notwendig);
- Einzug des Strömungsquerschnitts an der Sensorstelle für erhöhten Wärmeübergang durch Geschwindigkeitserhöhung möglich;
- Erweiterung des Strömungsquerschnitts zur Anpassung von Strömungsdruckverlust und Wärmeübergang auf das Optimum hin
- Ausführung als Umlenkung mit kleinen räumlichen Abmaßen im Falle eines eingeschränkten Platzangebots möglich.

Nochmals zusammengefasst seien hier die Vorteile der Erfindung und ihrer Ausgestaltungen:
- minimaler Druckverlust durch kleinen Störkörper (Spitze der Temperaturmesshülse) in der Strömung;
- gerade Durchströmung des Rohrleitungsmessstücks ohne Umlenkung der Strömung möglich;
- schnelle Temperaturanpassung aufgrund hoher Wärmeleitung durch geringe Wandstärke der Hülse hindurch;
- hohe Messgenauigkeit bei gleichzeitig hoher Druckfestigkeit;
- wechselbarer Temperatursensor, ohne Öffnung zum Prozess (ohne Zugang in das Rohrinnere);
- hohe Schwingungsfestigkeit durch kleinen Störkörper (Spitze der Temperaturmesshülse) in der Strömung und Führung im Rohrleitungsformbauteil;
- hohe Dichtheit durch Fertigung aus dem Vollen oder durch Dichtschweißung;
- geringe Gesamtgröße, dadurch einfacher Einbau

Neben dem Einsatz der Erfindung im Hochdruckbereich ist diese auch für Temperaturmessungen im Niederdruckbereich sowie im Einsatzbereich von Medien mit hoher Dichtheitsanforderung (giftige, reaktive, entzündliche Medien; Nahrungsmittel; pharmazeutische Produkte) besonders gut geeignet, insbesondere wenn die Notwendigkeit einer schnellen und genauen Temperaturmessung und/oder die Wechselbarkeit des Temperatursensors ohne Prozesseinwirkung besteht.

Es versteht sich, dass die vorstehend genannten und die nachfolgend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

### Figurenbeschreibung

Die Erfindung ist anhand von Ausführungsformen in den Zeichnungen schematisch dargestellt:
- Figur 1: zeigt schematisch eine Temperaturmesseinrichtung gemäß Stand der Technik;
- Figur 2: zeigt schematisch eine Ausführungsform einer erfindungsgemäßen Temperaturmesseinrichtung mit Temperaturmesshülse;
- Figur 3: zeigt eine Ausführungsform eines für die Einrichtung gemäß Figur 1 verwendeten Rohrleitungsformbauteils und
- Figur 4: zeigt eine Ausführungsform einer für die Einrichtung gemäß Figur 1 verwendeten Temperaturmesshülse.

Figur 1 wurde bereits in der Beschreibungseinleitung erläutert.

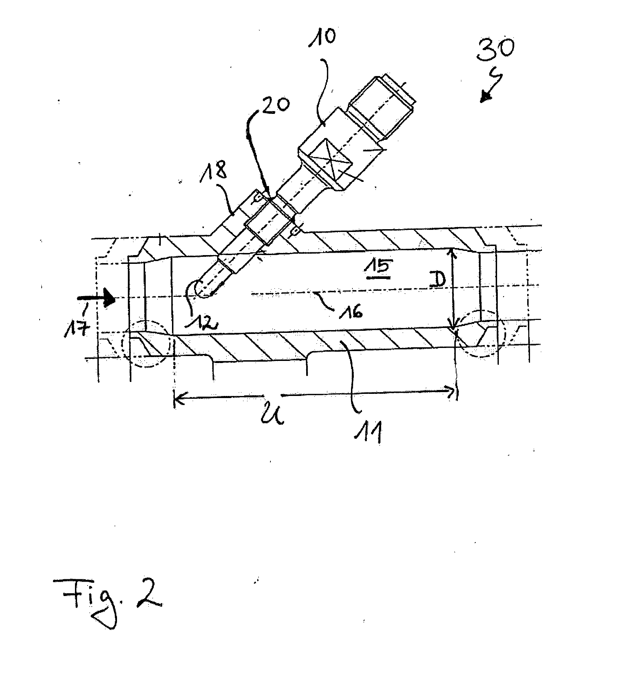

Die Figuren 2 bis 4 werden übergreifend beschrieben; gleiche Bezugszeichen weisen auf gleiche Element hin.

Figur 2 zeigt eine Temperaturmesseinrichtung 30 mit einem Rohrleitungsstück 11 und einer Temperaturmesshülse 10. Das Rohrinnere 15 des Rohrleitungsstücks 11 wird in Strömungsrichtung 17 von einem Medium 5, wie Wasserstoff, durchströmt. Die Längsachse des Rohrleitungsstücks 11 ist mit 16 bezeichnet. Die Temperaturmesshülse 10 ist mit ihrem vorderen Teil in einen Flansch 18 eingefügt (hier verschweißt). Die Dichtschweißnaht ist mit 20 bezeichnet. Ein vorderer Teil der Temperaturmesshülse 10 ragt in das Rohrinnere 15. Die Spitze der Temperaturmesshülse 10 ist mit 13 bezeichnet. Sie liegt vollständig im Rohrinneren 15. Im Inneren der Temperaturmesshülse 10 ist ein Temperatursensor (nicht dargestellt) angeordnet.

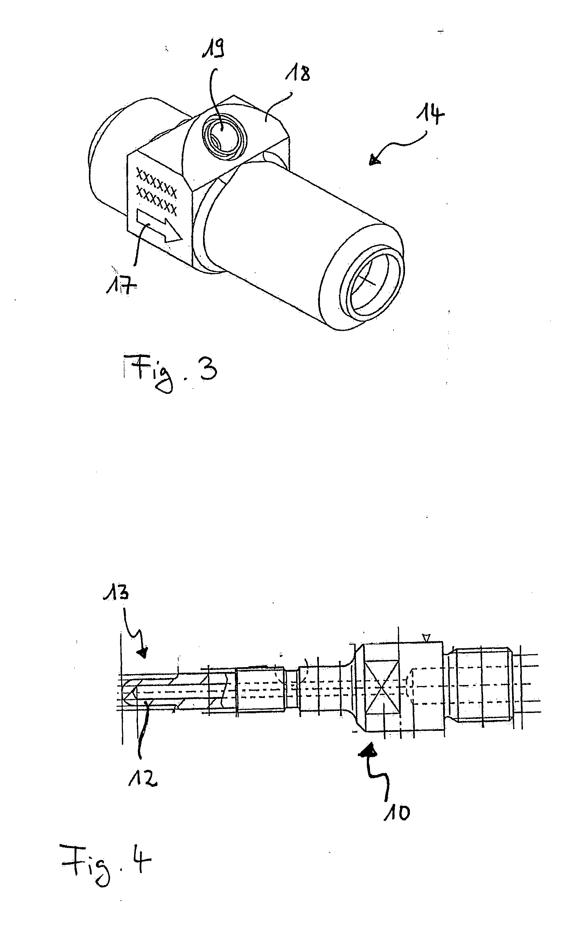

Bei dem in Figur 2 gezeigten Rohrleitungsstück 11 kann es sich um ein Rohrleitungsformbauteil 14, auch als Aufnahmefitting bezeichnet, handeln, wie es in Figur 3 dargestellt ist. Das Rohrleitungsformbauteil 14 wird in die Rohrleitung eingesetzt, in der das Medium fließt. Das Bauteil 14 weist einen Flansch 18 auf, der wiederum um eine Öffnung 19 zur Aufnahme der Temperaturmesshülse 10 verfügt. Der Flansch 18 ist vorzugsweise einstückig mit dem Formbauteil 14 ausgeführt. Die Strömungsrichtung des Mediums ist wiederum mit 17 bezeichnet.

Figur 4 zeigt die Temperaturmesshülse aus Figur 2 im Detail. Insbesondere sichtbar ist der vordere Bereich der Temperaturmesshülse 10 mit ihrer Spitze 13. Aus Figur 4 sind insbesondere die Durchmesser der Temperaturmesshülse 10 erkennbar und mit den Durchmessern des Rohrleitungsstücks 11 aus Figur 2 vergleichbar. Der Außendurchmesser der Temperaturmesshülse 10 ist in seinem vorderen Bereich geringer, gleich oder nicht wesentlich größer als der Innendurchmesser des Rohrleitungsstücks 11. In einem vorgegebenen Bereich 12 um die Spitze des Temperatursensors herum sind der Durchmesser und die Wandstärke, wie aus Figur 4 ersichtlich, nochmals herabgesetzt. Der in seiner Wandstärke nochmals verringerte Bereich 12 ragt, wie aus Figur 2 ersichtlich, vollständig in das Rohrinnere 15. Hierdurch wird eine schnelle, verzögerungsfreie Temperaturmessung ermöglicht, wobei die Konstruktion klein baut, schwingungsfest ist und die Strömung kaum beeinflusst. Das Verhältnis Aussendurchmesser der Spitze zu Innendurchmesser des Rohrleitungsstücks ist <= 0.75 ausgeführt.

Die Temperaturmesshülse 10 ist außerdem mit einem geringeren Außendurchmesser als derjenige des Rohrleitungsstücks 11 ausgeführt. Dies erlaubt die Einbringung der Temperaturmesshülse 10 in Rohren mit sehr geringen Innendurchmessern.

Die Achse der Temperaturmesshülse 10 schließt mit der Achse 16 des Rohrleitungsstücks 11 bezogen auf die Strömungsrichtung 17 einen spitzen Winkel ein, wobei die Spitze 12 der Temperaturmesshülse 10 etwa bis zur Längsachse 16 reicht. Dies ermöglicht eine genaue Temperaturmessung bei gleichzeitig geringer Beeinflussung der Strömungsdynamik.

Aus Figur 2 ist weiterhin ersichtlich, dass der Innendurchmesser D des Rohrleitungsstücks 11 bzw. des Rohrleitungsformbauteils 14 (vgl. Figur 3) in einer Umgebung U des Flansches 18 beispielhaft größer ausgeführt ist als außerhalb dieser Umgebung an den Endstücken des Rohrleitungsstücks 11. Hier wurde Strömungsgeschwindigkeit zu Wärmeübergang auf die Prozessanforderung hin optimiert.

Ein mögliches Einsatzgebiet ist die Verwendung bei gasförmigen und verflüssigten Gasen, z.B. Wasserstoff und Helium bei einem Druck bis 1000 bar. Im Transportwesen werden Trailer bis 500 bar betrieben. In der Automotive werden H2-Tankstellen für die Betankung bis 700 bar gebaut. Für die Verdichtung im gasförmigen/flüssigen Mediumzustand kommen Verdichter bis 1000 bar zum Einsatz.

Typische Rohrinnendurchmesser betragen von 5 mm bis 25 mm. Die Messung der Temperatur des Mediums dient hier zur Festlegung des maximalen Befülldrucks des Trailers/Automotive. Eine schnelle und möglichst unverfälschte Temperaturanzeige ist für den korrekten und sicheren Betrieb unabdingbar. Der Messbereich der Temperaturmessung liegt im Bereich von 4 Kelvin bis 373 Kelvin. Bei einer Temperaturmessung 1000 bar, DN 15 beträgt die Rohrwandstärke des Stücks 11 5,5 mm und die Rohrwandstärke des Bereichs 12 der Spitze 1,6 mm.

**Bezugszeichenliste**

| | |
|---|---|
| 1 | Temperaturmesshülse |
| 2 | Einsteckrohr |
| 3 | Stutzen |
| 4 | T-Stück |
| 5 | Medium |
| | |
| 10 | Temperaturmesshülse |
| 11 | Rohrleitungsstück |
| 12 | Bereich um Temperatursensor |
| 13 | Spitze |
| 14 | Rohrleitungsformbauteil |
| 15 | Rohrinneres |
| 16 | Achse des Rohrleitungsstücks |
| 17 | Strömungsrichtung |
| 18 | Flansch |
| 19 | Öffnung |
| 20 | Dichtschweißnaht |
| | |
| 30 | Temperaturmesseinrichtung |
| | |
| D | Innendurchmesser |
| U | Umgebung |

## Patentansprüche

1. Temperaturmesseinrichtung (30) zur Messung der Temperatur eines durch ein Rohrleitungsstück (11) fließenden Mediums, wobei die Temperaturmesseinrichtung (30) eine in das Rohrleitungsstück (11) eingebrachte Temperaturmesshülse (10) umfasst, in der ein Temperatursensor angeordnet ist, **dadurch gekennzeichnet,**
**dass** die Temperaturmesshülse (10) zum Teil in das Rohrleitungsstück (11) hineinragt, wobei die Wandstärke zumindest des in das Rohrleitungsstück (11) hineinragenden Teils der Temperaturmesshülse (10) geringer ist als die des Rohrleitungsstücks (11), wobei die Wandstärke und/oder der Außendurchmesser der Temperaturmesshülse in einem vorgegebenen Bereich (12) um den Temperatursensor herum nochmals verringert ist.

2. Temperaturmesseinrichtung nach Anspruch 1, **dadurch gekennzeichnet, dass** die Wandstärke und/oder der Außendurchmesser der Temperaturmesshülse (10) in einem vorgegebenen Bereich (12) an der Spitze (13) der Temperaturmesshülse (10) verringert ist.

3. Temperaturmesseinrichtung nach Anspruch 2, **dadurch gekennzeichnet, dass** die Temperaturmesshülse (10) mit dem vorgegebenen Bereich (12) an der Spitze (13) vollständig in das Innere (15) des Rohrleitungsstücks (11) hineinragt.

4. Temperaturmesseinrichtung nach einem der Ansprüche 1 bis 3, **dadurch gekennzeichnet, dass** die Temperaturmesshülse (10) hochdruckfest und/oder aus hochfestem Material ausgeführt ist.

5. Temperaturmesseinrichtung nach einem der vorhergehenden Ansprüche, **dadurch gekennzeichnet, dass** der Außendurchmesser des in das Rohrleitungsstück (11) hineinragenden Teils der Temperaturmesshülse (10) geringer ist als derjenige des Rohrleitungsstücks (11), insbesondere kleiner oder gleich dem Innendurchmesser des Rohrleitungsstücks (11), weiter insbesondere kleiner oder gleich der Wandstärke des Rohrleitungsstücks (11) ist.

6. Temperaturmesseinrichtung nach einem der vorhergehenden Ansprüche, **dadurch gekennzeichnet, dass** die Temperaturmesshülse (10) sich bis in einen Bereich um die Achse (16) des Rohrleitungsstücks (11) in das Innere (15) des Rohrleitungsstücks (11) erstreckt.

7. Temperaturmesseinrichtung nach einem der vorhergehenden Ansprüche, **dadurch gekennzeichnet, dass** die Achse der insbesondere im Wesentlichen zylinderförmigen Temperaturmesshülse (10) bezogen auf die Strömungsrichtung (17) des in dem Rohrleitungsstück (11) fließenden Mediums in einem spitzen Winkel zur Achse (16) des Rohrleitungsstücks (11) oder zu einer zur Achse (16) des Rohrleitungsstücks (11) parallelen Geraden steht.

8. Temperaturmesshülse (10) einer Temperaturmesseinrichtung (30) nach einem der Ansprüche 1 bis 7.

9. Rohrleitungsstück (11) einer Temperaturmesseinrichtung (30) nach einem der Ansprüche 1 bis 7, wobei das Rohrleitungsstück als Rohrleitungsformbauteil (14) zur Aufnahme der Temperaturmesshülse (10) ausgebildet ist.

10. Rohrleitungsstück nach Anspruch 9, wobei das Rohrleitungsformbauteil (14) einen Flansch (18) zur Aufnahme der Temperaturmesshülse (10) aufweist.

11. Rohrleitungsstück nach Anspruch 10, wobei der Innendurchmesser (D) des Rohrleitungsformbauteils (14) in einer Umgebung (U) des Flansches (18) größer ausgeführt ist als außerhalb dieser Umgebung (U).

12. Verwendung einer Temperaturmesseinrichtung (30) nach einem der Ansprüche 1 bis 7 zur Messung der Temperatur von durch das Rohrleitungsstück (11) fließendem Wasserstoff.
